# EUROPEAN PATENT APPLICATION

(11) **EP 4 696 605 A1**
(43) Date of publication of application: **18.02.2026**
(21) Application number: 25189907.6
(22) Date of filing: 16.07.2025
(51) Int. Cl.: B64D 33/02, F02C 7/04

(54) **AIR INLET ARRANGEMENT FOR A LOW OBSERVABLE AIRCRAFT AND SAME**

(30) Priority: 16.08.2024 DE 102024123401
(71) Applicant: Airbus Defence and Space GmbH, 82024 Taufkirchen (DE)
(72) Inventor: FRANK, Dennis, 82024 Taufkirchen (DE); BRÜNIG, Sascha, 82024 Taufkirchen (DE); PETERS, Sebastian, 82024 Taufkirchen (DE); KLÖPEL, Sebastian, 82024 Taufkirchen (DE)
(74) Representative: LKGLOBAL Partnerschaftsgesellschaft mbB

(57) **Abstract**

An air inlet arrangement (10) for a low-observable vehicle (1), in particular for a stealth aircraft, is provided with an inlet opening (12) and with a closure device (10) which closes the inlet opening (12) in a closed state (C) and which has at least one expansion section (23), wherein the at least one expansion section (23) is configured to be expansible in at least two spatial directions (X, Y, Z), and a vehicle (1), in particular a stealth aircraft, with at least one such air inlet arrangement (10).

## Description

### Technical field

The present disclosure relates to an air inlet arrangement for a low observable vehicle, in particular for a stealth aircraft, and to a vehicle, in particular a stealth aircraft.

### Technical background

Stealth of vehicles, such as military combat aircraft and equipment, from radar detection is an increasingly common requirement for current and future weapon systems. There are various ways to reduce detectability by radar systems, such as reducing the radar *cross section* (RCS), using *radar absorbing material* (RAM) and/or radar *absorbing structures* (RAS). These options must be used to reduce the detectability of the aircraft in its entirety, i.e. both the vehicle as such and any attachments or loads, such as weapons or weapon systems.

Low detectability or *low observability* is a key element for future vehicles, especially combat aircraft. However, even vehicles that are difficult to recognize, such as *stealth air superiority fighters* or stealth aircraft, require air intakes similar to other vehicles. In addition to main air intakes, which can feed the aircraft's engines, turbines or power units with outside air, secondary air intakes are often required, for example to supply or cool certain devices. The secondary air intakes must also be specially camouflaged from radar detection and at the same time meet the cooling requirements. The challenge is therefore to reconcile aspects of the technical functionality of the air intakes with their camouflage.

CN 115898639 A, for example, relates to an embedded air inlet duct with camouflage function, comprising a front flow guide opening, side edges, inclined side edge plates, a rear lip and side plates of the rear lip, wherein the front end of the front flow guide opening is in direct, smooth, rounded connection with the surface of an aircraft, the side edges are arranged on both sides of the front flow guide opening and the side plates of the rear lip are arranged on the side edges. The side edge extends to the rear and is smoothly connected to the rear lip. Both the side edge and the rear lip are lower than the surface of the aircraft, the side edge is in transitional connection with the surface of the aircraft via an inclined side edge plate and the rear lip is in transitional connection with the surface of the aircraft via a side plate of the rear lip. According to the invention, both the side edge and the rear lip have an unconventional continuous curved fairing design and both lie within the cross-sectional envelope of the aircraft. The modeling process is simple and the creation of a new scattering source is avoided. By using the design of the two differently inclined plates, the design idea of an inlet model is simplified, the manufacturing and processing cost of the air inlet duct is reduced, and the degree of rotation of the side edge vortices and the inlet amount of the side edge vortices are affected.

CN 213862688 U relates to an air intake device for environmental control in an aircraft, which includes an inner flow channel bounded between an upper boundary and a lower boundary. The air inlet is provided with an air inlet capture area, and air from the external environment can enter the internal flow channel through the air inlet. The lower boundary is jointly defined by the lower wall plate and the lip plate, wherein the lower wall plate comprises a lower wall plate inner surface bounding the lower boundary and a lower wall plate outer surface facing the external environment, and the lip plate comprises a lip plate inner surface bounding the lower boundary and a lip plate outer surface facing the external environment. The lip plate can be moved back and forth relative to the lower wall plate between a first position and a second position. In the first position, the air intake capture area is minimal and in the second position it is maximal. The ambient air intake device of the aircraft should have a simple structure and have a low impact on the aerodynamic drag of the aircraft.

Furthermore, EP 3 595 333 A1 deals with a MEMS (*microelectromechanical system*) device with a membrane that is configured to vibrate and has an auxetic structure at least in sections. The membrane of the MEMS device is configured to expand in at least a first lateral direction when vibrating, wherein the auxetic structure is configured to expand the membrane in a second direction as a result of the expansion of the membrane in the first direction, and/or wherein the auxetic structure is configured to increase a thickness of the membrane as a result of the expansion in the first direction.

EP 1 844 223 B1 relates to an aeration air intake device with a mobile sealing device. The arrangement comprises at least one air passage channel with a venting device and is intended for ventilating at least one limited area in an aircraft, fresh air entering the channel upstream through the venting device and exiting downstream thereof in the direction of the area to be ventilated. The invention is characterized in that the cross-section of the air passage duct is automatically adjustable as a function of the speed and altitude of the aircraft and in that the arrangement comprises controllable closure elements connected to the duct in order to change its cross-section.

DE 37 13 875 C1 shows an air intake on aircraft which has a lining made of radar-absorbing material, whereby a lining extending partially or over the entire length of the air intake can be divided into individual segments and is arranged on the inside of the air intake.

Approaches known from the state of the art for creating air inlets have the disadvantage that they may not always fully meet requirements for necessary or desired air inlet volumes on the one hand and the retention of low radar crosssections on the other, and may also have an undesirably complex structure. Quantitative restrictions would have to be countered by enlarging the air inlet, which in turn leads to an increased radar cross-section. Another problem with prior art air intake structures is that they may increase the drag of the aircraft, which can have a negative impact on the overall survivability and performance of an aircraft.

### Description

It can be considered an object to provide a reliable air inlet arrangement for vehicles that are difficult to locate, in particular stealth aircraft. In particular, an air inlet arrangement should be provided for such vehicles which, on the one hand, does not increase the radar backscatter cross-section of the vehicle, or at most only insignificantly, and, on the other hand, does not reduce the maximum speed of an aircraft, or at most only barely reduces it, preferably without being overly complex in design.

This object is solved by the subject matter of independent claim 1 and the subsequent claim 10. Further embodiments result from the dependent claims and from the following description.

In particular, the problem is solved by an air inlet arrangement for a low-observable vehicle, in particular for a stealth aircraft, with an inlet opening and with a closure device which closes the inlet opening in a closed state and which has at least one expansion section, wherein the at least one expansion section is configured to be expansible in at least two spatial directions.

In the case of a vehicle, in particular a supersonic stealth aircraft, the object is solved in particular by comprising at least one corresponding air inlet arrangement.

The closure device can be regarded as a flexible inlet flap or comprise such a flap. The air inlet arrangement can be used to take in cooling air or other outside air. A corresponding air inlet may be a secondary air inlet. Secondary air may be required, for example, to reduce an increased fuel temperature caused by pumps/actuators (hydraulics) as required. Alternatively, or additionally, an engine and/or avionics bay or a computing device located therein can be purged with the aid of secondary air. Emergency applications are also conceivable, such as supplying air to occupants of the vehicle, in particular a pilot, an auxiliary power unit or similar.

In this way, an air inlet can be provided that can be opened flexibly without significantly impairing the radar cross-section of the aircraft. By making the air inlet as elastically deformable as possible, the air resistance of the air inlet arrangement can also be kept so low that it has little or no effect on the maximum speed or drag coefficient of an aircraft and thus preserves its supersonic capability, i.e. its ability to fly at speeds greater than the speed of sound. Even when fully opened, the air inlet arrangement or its closure device can offer or expose as little radar cross-sectional area as possible in order to only reveal an air duct adjoining the inlet opening as concealed as possible, which could otherwise negatively influence the radar cross-section of the aircraft.

Advantageously, a corresponding air inlet arrangement can be configured in particular in such a way that it enables the supply of additionally required outside air with the smallest possible radar cross-section in the front view of the aircraft. A high performance of a vehicle, in particular an aircraft, can be maintained through a preferably low air resistance of the air inlet arrangement. The low air resistance of the air inlet arrangement can help to ensure that, even when fully open, it causes only a very low differential air resistance when the air inlet arrangement is opened compared to its closed state.

The proposed solution offers a number of advantages over the prior art. Due to the expansible design of the expansion section, the closure device can be opened or closed as infinitely variable as possible depending on the required air flow. This means that air resistance and the entire radar cross-section of the aircraft can be kept as low as possible, both when the closure device is open and when it is closed. In addition, the use of stretchable materials, components and morphing structures allows the creation of stealth properties when the air intake is open.

For example, a layer that is exposed to the external airflow or incoming radar waves can be provided with a coating of a single or one-piece flexible material that is as uniform as possible. This avoids the negative effects of different surface materials or steps/gaps in the outer skin of the vehicle and the associated aerodynamic and/or radar cross-sectional disadvantages. In addition, the number of gaps and gaps visible from the outside can also be drastically reduced in the closed state, for example by requiring only two visible edges along the opening geometry.

According to one embodiment of an air inlet arrangement, it may be provided that the at least one expansion section is configured to be expansible in a horizontal direction and a vertical direction with respect to an opening cross-section of the inlet opening. This allows the closure device to be flexibly deflected both in a direction into or out of the inlet opening and in a plane of the inlet opening. This further helps to design the opening geometry of the air inlet arrangement with the smallest possible radar cross-section and high aerodynamic efficiency.

According to one embodiment of an air inlet arrangement, it may be provided that the at least one expansion section comprises an auxetic shape change structure. For example, the auxetic structure can also be connected to a cover layer of the closure device via punctual contact points. The punctual contact points can be attached or arranged at junctions of the auxetic structure. In this way, a very high degree of flexibility can be achieved for the closure device.

In addition, the auxetic structure can not only expand or contract in one plane, but can alternatively or additionally be configured to be stretchable or bendable along at least one diagonal connecting line between corners of the closure device. The at least one diagonal line can be arranged in an extension of an axis of the bendable cover layer between a center plate and ramp of the closure device. **In** this way, an inclination of the center plate relative to the ramp can be enabled and/or facilitated.

According to one embodiment of an air inlet arrangement, it may be provided that the closure device comprises a substantially inflexible center plate having at least two side edges, each of which is connected to an inner periphery of the inlet opening via at least one elongation portion. **In** other words, a substantially rigid center plate can be provided. Expansion sections can be arranged around this center plate in accordance with the respective requirements, which connect the center plate to the inner circumference of the inlet opening. For example, two lateral expansion sections or morphing structures (flexible) can be provided with a center plate in the middle and a ramp at the edge of the closure device. Corresponding elements and components of the air inlet arrangement can be connected to each other via a continuous cover layer. With such a structure, the center plate can help to attach actuation kinematics to the closure device and thus achieve a desired opening geometry or a desired opening behavior and/or required stability of the closure device. In this way, the air inlet arrangement can be configured to be as reliable and stable as possible in accordance with the respective requirements, while at the same time being as simple and practical as possible.

According to one embodiment of an air inlet arrangement, it may be provided that the closure device is configured to protrude at least partially into the vehicle when the air inlet is open. Alternatively, or additionally, the air inlet arrangement can also allow the closure device to extend into an air flow, at least in sections, with as little adaptation as possible. While opening the closure device into the vehicle can improve the camouflage properties of the vehicle and the integration of the air inlet arrangement, this can lead to a loss of effectiveness of the air inlet arrangement, which means that the inlet opening would have to be enlarged accordingly, but this can be compensated for by the aforementioned other advantages and/or by opening the closure device at least in sections out of the vehicle.

According to one embodiment of an air inlet arrangement, it may be provided that the closure device is configured to be substantially aligned with the inlet opening in a projection from outside the air inlet arrangement into the inlet opening in at least one open position of the closure device. The closure device can be displaced parallel to the inlet cross-section at least in sections in order to cover the inlet opening in the vertical direction. If, for example, the central plate is shifted parallel, a stabilizing effect can occur due to the arrangement of the surrounding elements (lateral expansion sections or morphing structures and ramp). As a result, induced vibrations of the center plate, which can be triggered by the flow, can be suppressed. This type of stabilization can be particularly advantageous if the closure device opens outwards into the flow, at least in sections. However, this stabilization can also have a very positive effect on the stability of the air inlet arrangement if the closure device opens into the vehicle.

According to one embodiment of an air inlet arrangement, it may be provided that the air inlet arrangement comprises actuating kinematics which are configured to effect different angles of inclination between the closure device and the inlet opening depending on the degree of opening of the closure device. For example, three opening configurations are conceivable, namely opening by tilting the center plate, opening by tilting a ramp (the center plate is essentially only moved parallel to the structure of the air inlet) and/or opening by simultaneously tilting the center plate and ramp. Corresponding actuation kinematics can control an opening angle of the air inlet arrangement or its closure device as a function of a control system according to air requirements and thus help to provide the required air supply while keeping the vehicle as camouflaged as possible.

According to one embodiment of an air inlet arrangement, a flexible transition duct section can be provided, which is configured to provide a flexible transition between the closure device and an air duct. The air duct may be relatively rigid and/or stationary. A flexible transition duct section can thus help to create a transition between the air inlet arrangement or its air inlet and the air guide duct that is as streamlined as possible. This can also help to design the opening geometry of the air inlet arrangement with the smallest possible radar cross-section and high aerodynamic efficiency.

According to one embodiment of an air inlet arrangement, it may be provided that at least the closure device is configured to be radar-absorbing at least in sections and/or is provided with a radar-absorbing material. For example, a geometry of the air inlet arrangement, in particular the closure device, can be configured to be as radar-absorbent as possible or at least non-reflective. This can help to improve the radar cross-section of the air inlet arrangement and thus any stealth properties of the entire vehicle.

### Brief description of the figures

Some details are described in more detail below using the attached drawings. The illustrations are schematic and not to scale. Identical reference signs refer to identical or similar elements. They show
- Fig. 1: a schematic perspective view of an embodiment of a vehicle in the form of an aircraft with two air inlet arrangements;
- Fig. 2: a schematic semi-transparent perspective view of an embodiment of an air inlet arrangement;
- Fig. 3: a further schematic semi-transparent perspective view of the example embodiment of an air inlet arrangement shown in Fig. 2;
- Fig. 4: a schematic cross-sectional view of the example embodiment of an air inlet arrangement shown in Figs. 2 and 3;
- Fig. 5: a schematic top view of the embodiment shown in Fig. 4 of a closure device of the embodiment of an air inlet arrangement shown in Figs. 2 to 4 in a closed state;
- Fig. 6: a schematic perspective view of the embodiment example of a closure device shown in Fig. 5 in a closed state;
- Fig. 7: a schematic perspective view of the embodiment example of a closure device shown in Figs. 5 and 6 in a half-open state;
- Fig. 8: a schematic perspective view of the embodiment example of a closure device shown in Figs. 5 to 7 in an open state;
- Fig. 9: a schematic cross-sectional view of an example embodiment of an expansion section of a closure device;
- Fig. 10: a schematic perspective detail view of the example embodiment of an expansion section of a closure device shown in Fig. 9;
- Fig. 11: a schematic side view of a substitution model of an embodiment of an actuating device of an air inlet arrangement;
- Fig. 12: a schematic side view of an embodiment of an actuating device of an air inlet arrangement in the closed state;
- Fig. 13: a schematic side view of the embodiment example of an actuating device of an air inlet arrangement shown in Fig. 12 in the open state;
- Fig. 14: a schematic side view of a further embodiment of an actuating device of an air inlet arrangement in the closed state; and
- Fig. 15: a schematic side view of a substitution model of the further embodiment example of an air inlet arrangement shown in Fig. 14 in the open state.

### Detailed description

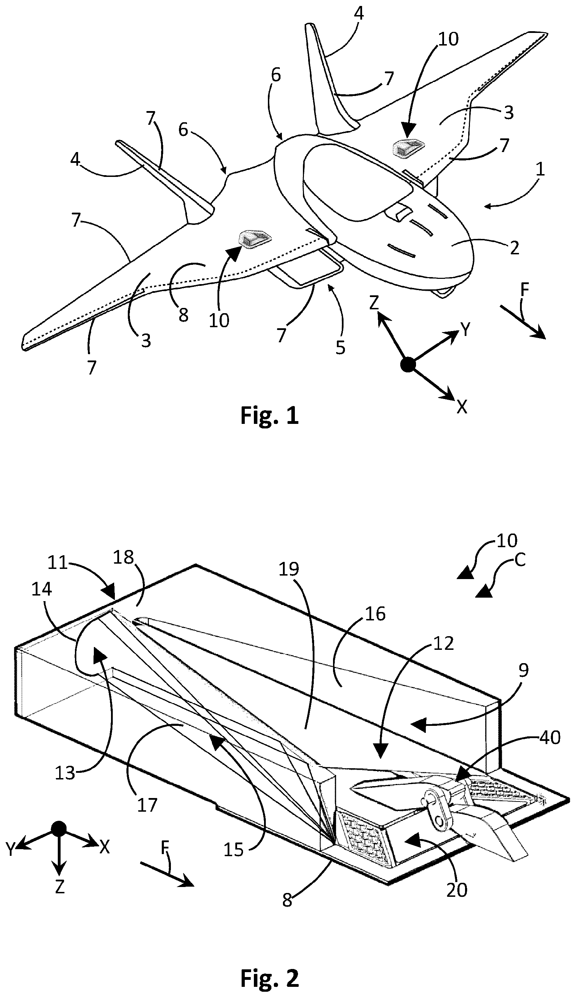

Fig. 1 shows a schematic perspective view of a vehicle 1, preferably in the form of an aircraft, which can be configured as a stealth aircraft, for example. The vehicle 1 has a fuselage 2, wings 3, a fin 4 as well as air inlets 5 and air outlets 6. Leading edges 7 can be formed on the two wings 3 as well as the fins 4 and air inlets 5. In addition, the vehicle has at least one air inlet arrangement 10 embedded into an outer skin 8 of the vehicle 1 and configured to be accommodated substantially in its interior 9 (see Fig. 2), in the present embodiment example two air inlet arrangements 10, which are arranged on the upper sides of the wings 3, can serve as secondary air inlets and as such can assume an open state O and a closed state C, the latter being shown in Fig. 1. The vehicle 1 extends in a longitudinal direction X, a transverse direction Y and a vertical direction Z, which together span a Cartesian coordinate system, wherein the vehicle 1 is configured to move or fly in a direction of travel or flight direction F that is essentially parallel to the longitudinal direction X.

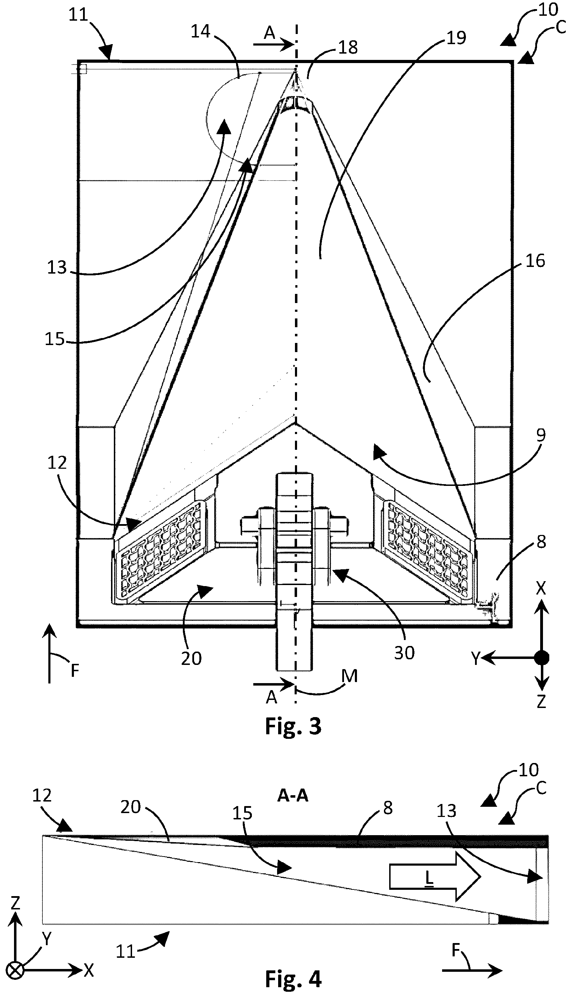

Fig. 2 shows a schematic semi-transparent perspective view of an example embodiment of an air inlet arrangement 10 in the closed state C. The air inlet arrangement 10 comprises, for example, a box-like inlet structure 11, at least one inlet opening 12 and at least one outlet opening 13, which can lead to an air duct 14 of the vehicle 1, which is configured, for example, to supply a device or equipment (not shown) of the vehicle 1 with air L or secondary air (see Figs. 4 and 7 to 15). Furthermore, the inlet structure 11 forms a transfer duct 15 tapering conically from the inlet opening 12 to the outlet opening 13 in the transverse direction Y with side wall sections 16, a ceiling section 17 and/or a bottom section 18.

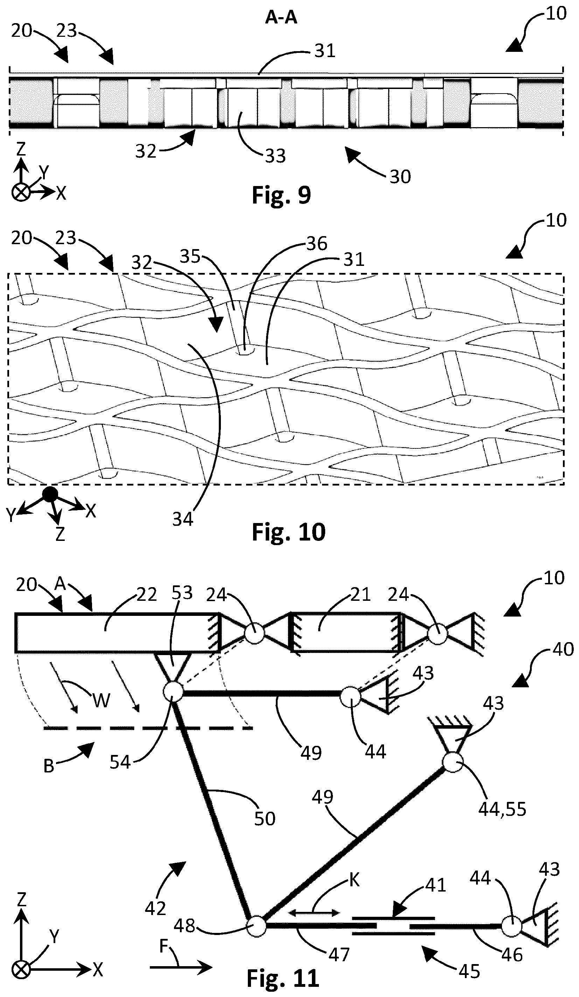

A flexible transfer duct section 19 of the transfer duct 15 can be provided and can be configured to be expansible in such a way that it provides a flexible connection between the inlet structure 11, the inlet opening 12, the outlet opening 13, the air duct 14 and/or at least one closure device 20 of the air inlet arrangement 10. The closure device 20 is configured to close the inlet opening 12. An actuating device 40 can be provided to actuate the closure device 20 (see Figs. 11 to 15). The actuating device 40 can be connected on the one hand to the closure device and on the other hand to the body 2 and/or the outer skin 8 of the vehicle 1 in order to transfer the air inlet arrangement 10 from the closed state C to the open state O and vice versa by applying corresponding opening or closing forces.

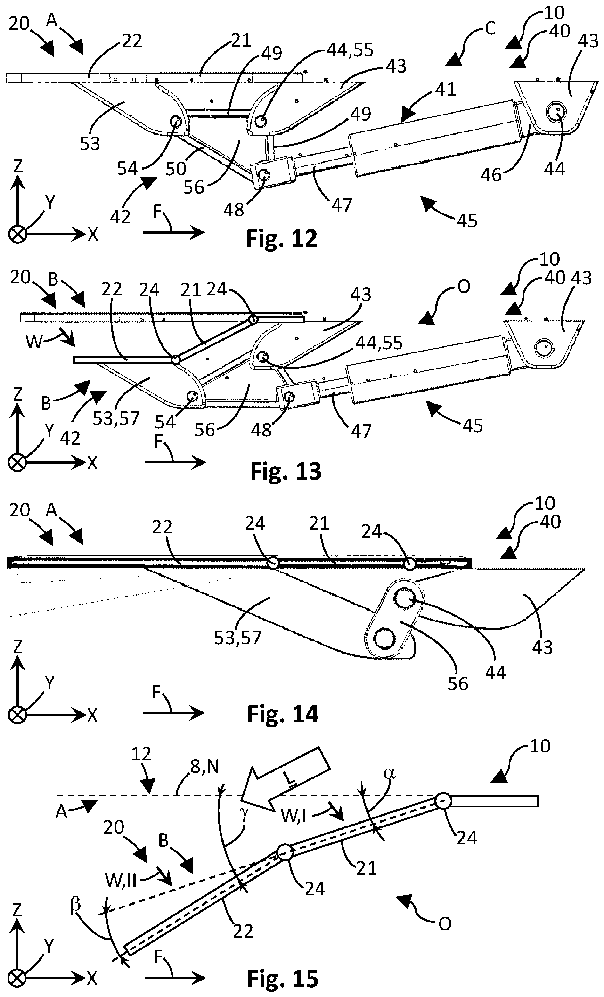

Fig. 3 shows a further schematic semi-transparent perspective view of the example embodiment of the air inlet arrangement 10 shown in Fig. 2. The closure device 20 is configured to be moved into the interior 9 by the actuating device 40 in order to transfer the air inlet arrangement 10 from the closed state C to the open state O. Air L flowing in the direction of flight F (see Figs. 4 and 15) should then flow along the transfer duct section 15 to the outlet opening 13. The transfer duct 15 narrows along the flight direction F in the transverse direction Y towards the outlet opening 13. The flexible transfer duct section 19 continues the bottom section 18 of the transfer channel 15 to the closure device 20 and is connected directly to it with as few gaps as possible.

Fig. 4 shows a schematic cross-sectional view of the example embodiment of an air inlet arrangement shown in Figs. 2 and 3, for example along a sectional line A-A drawn in Fig. 3, which may be a center line or center axis M of the air inlet arrangement 10. Here it becomes apparent that the transfer duct 15 can widen in the direction of flight F against the height direction Z or away from the inlet opening 12 in the direction of the outlet opening 13. The transfer duct 15 can have an essentially triangular cross-section in order to be able to transfer the air L from the inlet opening 12 to the outlet opening 15.

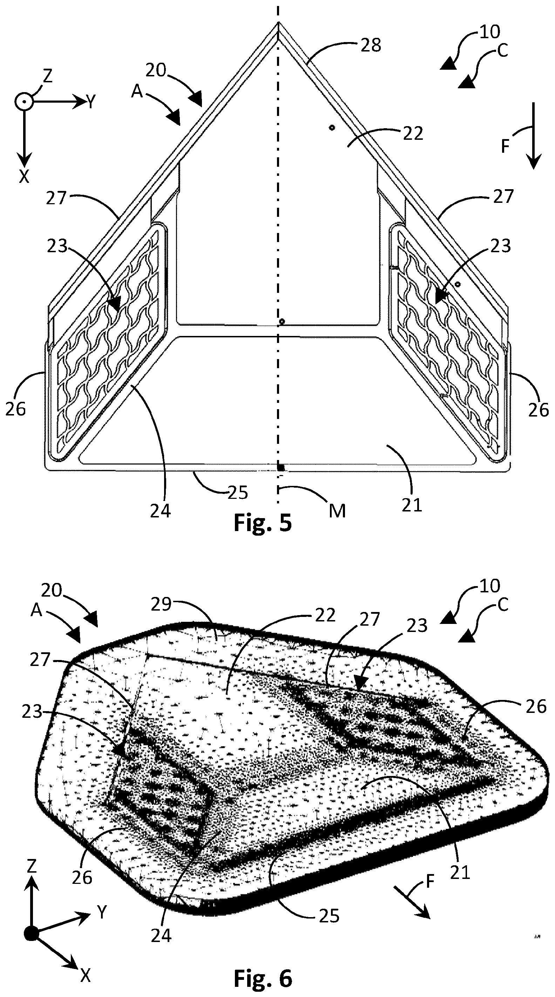

Fig. 5 shows a schematic top view of the example embodiment shown in Fig. 4 of a closure device 20 of the embodiment example of an air inlet arrangement 10 shown in Figs. 2 to 4 in a closed state C. The closure device 20 comprises, for example, a ramp section 21, a center plate 22 and two expansion sections 23 and which can be connected to one another by flexible connecting sections 24. The connecting sections 24 can at least partially encircle the closure device 20.

Ramp section 21 is framed at its rear edge pointing against the direction of flight F by one of the connecting sections 24, which forms a front edge 25 of the closure device 20. The connecting sections 24 can extend along side edges 26 of the closure device 20, which, similar to the area of the front edge 25, laterally surround the expansion sections 23. Together with the expansion sections 23, the center plate 22 is provided with rear edges 27 of the closure device 20, which extend in a triangular shape towards a tip pointing against the direction of flight F and can be provided with sealing elements 28, for example in the form of sealing lips.

In the present embodiment example, the closure device 20 is configured to be mirror-symmetrical to the central axis M. In the plan view shown in Fig. 5, the ramp section 21 is trapezoidal in shape. The center plate 22 has a rectangular basic shape, which tapers towards the tip of the closure device 20 like a kind of pointed tip in a triangular end section. The expansion sections 23 connect to the sides of the rectangular part of the center plate and are, for example, parallelogramshaped. In the closed state C, the closure device is in a closed position A.

Fig. 6 shows a schematic perspective view of the example embodiment of the closure device 10 shown in Fig. 5 in the closed state C, whereby it can be seen here that in the closed position A the closure device 10 can lie essentially flat in a plane spanned by longitudinal direction X and transverse direction Y. Furthermore, the closure device 10 is provided with a frame 29 or outer skin and/or structure of the aircraft 1, in which the front edge 25 and side edge 26 can be enclosed via respective transition sections 24. In the closed position A, the rear edges 27 are aligned with the frame in the flight direction F and can be flush with the frame 29 via the sealing elements 28, with the aid of which the closure device 10 can be fastened in the inlet structure 11 or the outer skin 8.

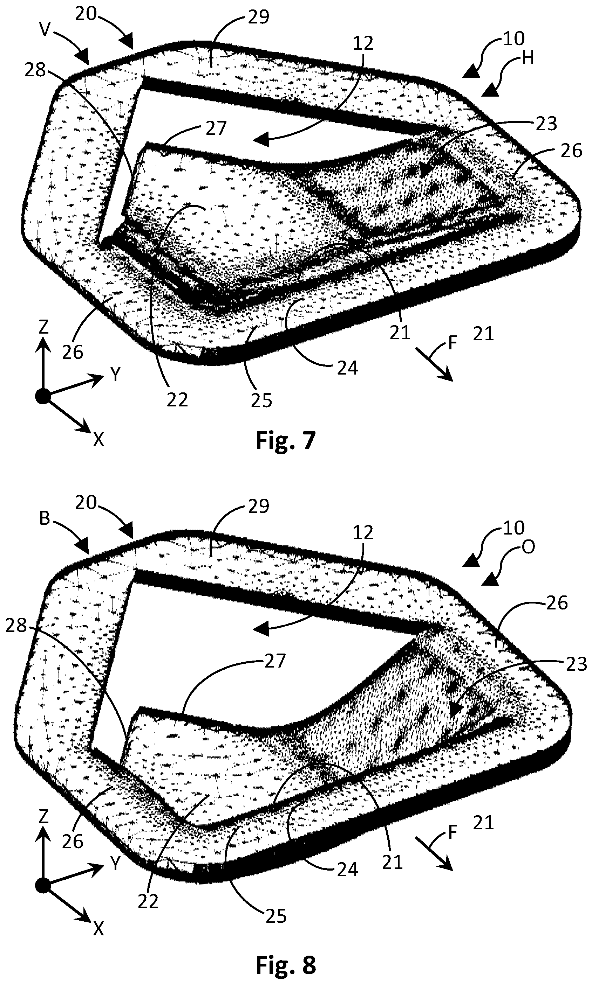

Fig. 7 shows a schematic perspective view of the example embodiment of a closure device shown in Figs. 5 and 6 in a half-open state **H,** in which the closure device 20 can be in an intermediate position V between closed position A and open position B (see Fig. 8). In the half-open state H, the center plate is moved out of the closed position A against the height direction Z, so that the rear edges 27 are detached from the frame 29 and the inlet opening 12 is half open. The rear edges 27 are therefore free. Air L can flow against the direction of flight F along the ramp 21 and the expansion sections 23 down onto the center plate 22.

Fig. 8 shows a schematic perspective view of the example embodiment of a closure device shown in Figs. 5 to 7 in an open state, in which the closure device 20 is in an open position. In the open state O, the center plate is moved against the height direction Z to a maximum position out of the closed position A or intermediate position V, so that the inlet opening 12 is fully open.

The trailing edges 27 are free. Air L can flow against the direction of flight F along the ramp 21 and the expansion sections 23 down onto the center plate 22. The ramp section 21 and the expansion sections 23 are deflected along the connecting sections 24, which act like flexible strap hinges. The expansion sections 23 have clearly expanded in all three spatial directions. The ramp section 21, center plate 22 and/or expansion sections 23 can therefore be flexibly embedded in the frame 29 with the aid of the connecting sections 24.

Fig. 9 shows a schematic cross-sectional view of an example embodiment of an expansion section 23 of the closure device 20, for example along a sectional line A-A shown in Fig. 3. The expansion section 23 has a shape change structure 30. The entire closure device 20 and/or shape change structure 30 can be provided with or comprise a cover layer 31. The shape change structure 30 may further comprise a honeycomb structure 32 with honeycombs 33. The cover layer 31 may cover the honeycomb structure 32 and may be molded from an elastic polymeric material, such as thermoplastic polyurethane (TPU). Thus, the cover layer 31 can form an outer skin of the air inlet arrangement 10 or the closure device 20 or at least of the expansion section 23 or its shaping structure 30.

Fig. 10 shows a schematic perspective detailed view of the example embodiment of the expansion section 23 of the closure device 20 shown in Fig. 9. It is clear here that the honeycombs 33 have walls 34. The walls 34 extend away from the cover layer 31 in the opposite direction to the height direction Z, can be shaped like waves and surround the honeycombs 33 or cavities, which can be filled with radar-absorbing foam. The walls 34 intersect at crossing points 35, which can form junctions between the honeycombs 33.

Connection points 36 between the honeycomb structure 32 and the cover layer 31 can be provided at the crossing points 35. The honeycomb structure 32 can be selectively connected to the cover layer 31 via the connection points 36. The punctual connection makes it possible that the cover layer 31 does not form too strong a stiffening of the expansion section 23 and thus allows the deformation, but at the same time is connected to it and therefore does not represent a structural weak point.

Fig. 11 shows a schematic side view of a substitution model of an embodiment example of the actuating device 40 of the air inlet arrangement 10. the actuating device 40 comprises a drive unit 41 and actuating kinematics 42. The drive unit 41 can be configured as a linear drive, for example as a hydraulic piston or the like.

The actuating kinematics 42 can be connected to the inlet structure 11 or the body 2 of the vehicle 1 via attachment points 43. The attachment points can provide bearing points 44 or be configured as such. The drive unit and/or the actuating kinematics 42 can be held movably at the bearing points 44. The drive unit 41 can be integrated into a drive arrangement 45, for example a hydraulic cylinder device.

The drive arrangement 45 can comprise a support element 46 and a drive element 47. The support element 46 can be attached to an attachment point 43 via one of the bearing points 44. The drive unit 41 can be arranged to move linearly between the support element 46 and the drive element 47 in order to be able to exert a drive force K on the drive element 47.

Furthermore, the actuating kinematics 42 can comprise a lever point 48, to which the drive element 47, a deflection element 49 and/or a transmission element 50 can be connected. The transmission element 50 can be connected to the closure device 20, in particular its center plate 22, at a connection point 53. A transmission bearing 54 can be formed between the connection point 53 and the transmission element 50. The transmission bearing 54 can be connected to a corresponding further attachment point 43 via a further deflection element 49 via a further bearing point 44.

During operation of the air inlet arrangement 10, the drive unit 41 can use a corresponding regulation and/or control system (not shown) to transmit the drive force K in the form of a tractive force to the lever point 48, which is connected to the bearing point 44 via the deflection element 49, which can act as a pivot point 55. The tensile force is thus deflected by a kind of rotational movement around the pivot point 55 and transmitted to the transmission element 50, which moves the closure device 20, in particular its center plate 22, from the closed position A along an opening path W into the open position B. Conversely, the drive force can move the closure device 20, in particular its center plate 22, from the open position B back into the closed position B against the opening path.

Fig. 12 shows a schematic side view of an example embodiment of an actuating device 40 of an air inlet arrangement 10 in the closed state C. In the present embodiment example, the drive unit 41 is configured as a hydraulic cylinder, which is connected to the support element 46 via the bearing point 44 to the attachment point 43. The attachment point 43 can be configured as an attachment lug, for example as a double lug. The drive element 47 can be configured in the form of a drive piston.

Deflection elements 49 and transmission element 50 can be combined in an actuating element 56. The actuating member 56 can be configured as a kind of deflector, for example as an angle or the like, so that the lever point 48, the bearing point 44, the transmission bearing 54 and/or the pivot point 55 can be arranged or attached or formed thereon. The fastening point 43 and/or the connection point 53 can be provided as a corresponding fastening or connection element, for example in the form of fastening straps.

Fig. 13 shows a schematic side view of the example embodiment of the actuating device 40 of the air inlet arrangement shown in Fig. 12 in the open state O. In comparison with the closed state C shown in Fig. 12, it is apparent that the actuating device 40 has moved the closure device 20 from the closed position A to the open position B. For this purpose, the actuating element 56 can transmit the drive force K exerted by the drive element 47 to the connection point 53. The connection point 53 can be equipped or attached as or to an actuating element, in particular to the center plate 22, so that this pulls the ramp section 21 and the expansion sections 23 with it into the open position B. In the present embodiment, the center plate 22 performs a parallel displacement along the opening path W into the interior 9 (see Fig. 2).

Fig. 14 shows a schematic side view of a further embodiment example of an actuating device 40 of an air inlet arrangement 10 in the closed state C. In the present example embodiment, the actuating element 56 can be configured as a deflection lever. The connection point 53 is configured as an actuating element 57 in the form of an actuating arm, which can be connected to the closure device 20, in particular its center plate 22, in a motion-transmitting manner.

Fig. 15 shows a schematic side view of a substitution model of the further example embodiment of the air inlet arrangement 10 shown in Fig. 14 in the open state. It is apparent here that the closure device 20 is generally - i.e. applicable to all embodiments described in here - preferably aligned in the closed position A with an initial plane N, from which it is moved to reach the open position B. The initial plane N can be aligned with and/or defined by the outer skin 8. By definition, the inlet opening 12 can extend essentially parallel to the initial plane N. In the present embodiment example, the open position B can be reached in at least two path sequences, for example a first path sequence I and a second path sequence II, with different angles of inclination α, β, γ, relative to the initial plane N or inlet opening 12.

In a first step or in the first travel sequence I, for example in the intermediate position V, the closure device 20 can assume a first angle of inclination α between the ramp section 21 and/or the center plate 22 on the one hand and the output plane N or inlet opening 12 on the other hand. In a second step or in the second path sequence II, the closure device 20 can assume a second angle of inclination β between the ramp section 21 and/or the center plate 22 on the one hand and the output plane N or inlet opening 12 on the other hand. The first angle of inclination α and the second angle of inclination β can add up to a total angle of inclination y.

Said angles of inclination α, β, γ can be adjusted as desired according to the respective requirements by setting them as steplessly as possible simultaneously and/or one after another. Ramp section 21 and center plate 22 can move simultaneously and/or sequentially one after the other and thereby assume respective inclination angles α, β, y relative to each other and/or the starting plane or an opening 12. A rotational movement necessary to achieve the inclination angles a, β, γ can be combined with a translational opening path W to form a movement path configured according to the respective requirements.

The embodiments described provide a flexible air inlet or an air inlet arrangement 10 with several elements, which can be suitably arranged to ensure a variable and less visible air inlet geometry. The elements described can consist of auxetic morphing structures, as well as materials and various components that are difficult to locate. Depending on the exact arrangement of the elements, different movements can be generated. The air intake advantageously opens inwards towards the inside of the vehicle 1, which allows for reduced radar visibility.

In addition, the air inlet arrangement 10 can be opened like a double embedded flap to enable good aerodynamic properties. By choosing an actuation kinematics 42 configured according to the respective requirements, the elongation of cover layers 21 can be reduced and it is possible to use relatively thick coatings to reduce the radar signature or radar absorption. In order to create an opening cross-section, expansion sections as 23 morphing elements on the sides of the closure device can be stressed mainly by shearing and/or bending and not only by stretching. Since the flexible air inlet can combine different functions in a uniform form factor, visible discontinuities/disruptions on the outside of the vehicle 1 can be avoided. If the cover layer 31 or a corresponding coating is continued inwards into the air inlet arrangement 10, it can also be used for a flexible inner duct or a corresponding transfer duct section 19, which can be configured flexibly according to the respective requirements.

In addition, it should be noted that "comprising" or "comprising" does not exclude other elements or steps and "a" or "one" does not exclude a plurality. Furthermore, it should be noted that features or steps described with reference to one of the above embodiments may also be used in combination with other features or steps of other embodiments described above. Reference signs in the claims are not to be regarded as a limitation.

### List of reference signs

- 1: Vehicle / aircraft / stealth aircraft
- 2: Fuselage
- 3: Wing
- 4: Vertical stabilizer
- 5: Air inlet
- 6: Air outlet
- 7: Leading edge
- 8: Outer skin
- 9: Interior

- 10: Air inlet arrangement
- 11: Inlet structure
- 12: Inlet opening
- 13: Outlet opening
- 14: Air duct
- 15: Transfer duct
- 16: Side wall section
- 17: Ceiling section
- 18: Bottom section
- 19: Transfer duct section

- 20: Closure device
- 21: Ramp section
- 22: Center plate
- 23: Expansion section
- 24: Connecting section
- 25: Leading edge
- 26: Side edge
- 27: Trailing edge
- 28: Sealing element
- 29: Frame

- 30: Shape change structure
- 31: Cover layer
- 32: Honeycomb structure
- 33: Honeycomb
- 34: Wall
- 35: Crossing point
- 36: Connection point

- 40: Actuating device
- 41: Drive unit
- 42: Actuating kinematics
- 43: Mounting point
- 44: Bearing point
- 45: Drive arrangement
- 46: Support element
- 47: Drive element
- 48: Lever point
- 49: Deflection element
- 50: Transmission element
- 53: Connection point
- 54: Transmission bearing
- 55: Pivot point
- 56: Actuating element / deflector
- 57: Actuating element/arm

- I: First travel sequence
- II: Second travel sequence

- A: closed position
- B: open position
- C: closed position
- F: Flight / travel direction
- H: half-open state
- K: Driving/actuating force
- L: Air
- M: Center axis
- N: initial plane
- O: open state
- V: Intermediate position / middle position
- W: Opening path/movement path
- X: Longitudinal direction
- Y: Transverse direction
- Z: vertical direction

## Claims

1. Air inlet arrangement (10) for a low-observable vehicle (1), in particular for a stealth aircraft,
with an inlet opening (12) and
with a closure device (10) which closes the inlet opening (12) in a closed state (C) and which has at least one expansion section (23),
wherein the at least one expansion section (23) is configured to be expansible in at least two spatial directions (X, Y, Z).

2. Air inlet arrangement (10) according to claim 1, **characterized in that** the at least one expansion section is configured to be expansible in a horizontal direction (X, Y) and a vertical direction with respect to an opening cross-section of the inlet opening (12).

3. Air inlet arrangement (10) according to claim 1 or 2, **characterized in that** the at least one expansion section (23) comprises an auxetic shape change structure (30).

4. Air inlet arrangement (10) according to at least one of claims 1 to 3, **characterized in that** the closure device (10) comprises a substantially inflexible central plate (22) with at least two side edges, each of which is connected to an inner circumference of the inlet opening (12) via at least one expansion section (23).

5. Air inlet arrangement (10) according to at least one of claims 1 to 4, **characterized in that** the closure device (10) is configured to project at least in sections into the vehicle (1) in an open state of the air inlet (5).

6. Air inlet arrangement (10) according to at least one of claims 1 to 5, **characterized in that** the closure device (10) is configured to be substantially aligned with the inlet opening (12) in a projection from outside the air inlet arrangement (10) into the inlet opening (12) in at least one open position of the closure device (10).

7. Air inlet arrangement (10) according to at least one of claims 1 to 6, **characterized, by** actuating kinematics (42) which are configured to effect different angles of inclination (a, b, g) between the closure device (10) and the inlet opening (12) depending on the degree of opening of the closure device (10).

8. Air inlet arrangement (10) according to at least one of claims 1 to 7, **characterized by** a flexible transfer duct section (19) configured to provide a flexible transition between the closure device (10) and an air guide duct (14).

9. Air inlet arrangement (10) according to at least one of claims 1 to 8, **characterized in that** at least the closure device (10) is configured to be radar-absorbing at least in sections and/or is provided with a radar-absorbing material.

10. Vehicle (1), in particular stealth aircraft, **characterized by** at least one air inlet arrangement (10) according to at least one of claims 1 to 9.
